# EUROPÄISCHE PATENTSCHRIFT

(11) **EP 1 093 996 B1**
(45) Veröffentlichungstag und Bekanntmachung des Hinweises auf die Patenterteilung: **08.09.2004**
(21) Anmeldenummer: 00121901.3
(22) Anmeldetag: 07.10.2000
(51) Int. Cl.: B62D 55/21

(54) **Kette für Kettenfahrzeuge**
Track for tracked vehicles
Chenille pour véhicules à chenilles

(30) Priorität: 23.10.1999 DE 29918683 U
(43) Veröffentlichungstag der Anmeldung: 25.04.2001
(73) Patentinhaber: Intertractor GmbH, 58285 Gevelsberg (DE)
(72) Erfinder: Ketting, Michael, Prof. Dr., 58256 Ennepetal (DE); Böttger, Friedrich, Dr.-Ing., 42781 Haan (DE)
(74) Vertreter: Köchling, Conrad-Joachim, Dipl.-Ing.

(56) Entgegenhaltungen:
- DE-A- 3 021 325
- DE-A- 3 045 709
- GB-A- 1 222 602
- US-A- 3 096 661

## Beschreibung

Die Erfindung betrifft eine Kette für Kettenfahrzeuge oder Fördereinrichtungen mit Kettenbolzen und Kettenbuchsen, die auf die Kettenbolzen konzentrisch zu diesen aufgesteckt sind und aus denen die Enden der Kettenbolzen vorragen, mit paarweise parallel angeordneten Kettengliedern mit Lageraugen an beiden Enden, deren eines mit einem ersten Kettenbolzen und deren anderes mit einer auf einen dem ersten Kettenbolzen benachbarten zweiten Kettenbolzen aufgesteckten Kettenbuchse drehfest verbunden ist, sowie mit geteilten Kettenendgliedern, bestehend aus einem Kettengliedpaar mit jeweils einem ein Kettenbolzen-Lagerauge aufweisenden und einem ein Kettenbuchsen-Lagerauge aufweisenden ersten und zweiten Teilglied, deren von den Lageraugen abragende in Längslaufrichtung der Kette zueinander gerichtete hakenartige Vorsprünge einander überdeckend angeordnet und lösbar durch eine ineinander greifende Verzahnung miteinander verbunden sind, wobei die Zähne und Zahnlücken der Verzahnung der Teilglieder miteinander in Eingriff oder voneinander außer Eingriff bringbar sind, wobei jedes Kettenglied eine äußere Fläche zur Aufnahme einer Bodenplatte und eine dazu parallele innere Fläche als Lauffläche für Stütz-, Tragrollen, Umlenk- und/oder Antriebsräder aufweist, die Trennebene zwischen dem ersten und zweiten Teilglied des Kettengliedes etwa diagonal zur Kettenlängserstreckung beziehungsweise zur Kettengliedlängserstreckung verläuft, und im Bereich der Trennebene an jedem Teilglied mindestens ein Zahn und eine Zahnlücke ausgebildet ist. Durch die Trennebene ist das Kettenglied quasi in ein oberes Teilglied und ein unteres Teilglied zerlegt.

Aus der US 4,361,364 und der US 3,659,112 sind Ketten ähnlicher Art bekannt. Obwohl sich insbesondere die Ausbildung nach der US 4,361,364 in der Praxis bewährt hat, weist eine solche Ausbildung Nachteile auf. Die Fertigung solcher Endglieder für Ketten ist sehr aufwendig, da solche Kettenglieder in Schmiedewerkzeugen vorgeformt werden müssen, wobei dann die entsprechenden Zahnungen und Zahnlücken durch aufwendige Bearbeitung erzeugt werden müssen. Dies verteuert die Herstellung. Zudem ist die Montage relativ schwierig, weil die beiden zueinander parallelen und mit seitlichem Abstand voneinander angeordneten Endglieder praktisch gleichzeitig mit ihren Zähnen in die Zahnungen eingefädelt und geschwenkt werden müssen, wobei häufig oberhalb des oberen Kettentrums, dessen Endteile durch die Endglieder verbunden werden sollen, wenig Raum für die Montage besteht.

Bei der aus der US 3,659,112 bekannten Lösung sind ähnliche Nachteile gegeben, wobei dort zudem keine Haltung ohne Schraubverbindung möglich ist. Die Endteile der Kettenendglieder liegen zwar durch Verzahnung aneinander, müssen aber durch quer eingeschraubte Bolzen miteinander verschraubt werden. Diese Bolzen sind in erheblichem Maße scherkraftbelastet, sofern die Kette bestimmungsgemäß beansprucht wird.

Bei solchen Kettengliedern verläuft die Trennebene etwa vertikal, so dass das Kettenglied in ein rechtes und ein linkes Teilglied zerlegbar ist.

Aus der GB 1 222 602 A, der US 3,427,079, der US 4,457,565 und der DE 30 21 325 A 1 sind Ketten gattungsgemäßer Art bekannt. Die in diesen Druckschriften beschriebenen Endglieder für Ketten sind sämtlich mit dem Nachteil behaftet, dass die ineinander greifenden Verzahnungen nicht selbst haltend sind, sondern bei Zugbelastungen der Kette, wie sie im Betrieb der Kette normalerweise auftreten, die Tendenz besteht, daß die Zahnungen der Endglieder auseinander gedrängt werden. Infolgedessen sind die dortigen Befestigungsschrauben für die entsprechenden Bodenplatten im erheblichen Maße scherkraftbelastet. Ohne die Anordnung der entsprechenden Schrauben, die zur Fixierung der Bodenplatten dienen, halten diese Endglieder nicht ineinander.

Dieses Problem ist im Stand der Technik schon lange bekannt. Zur Lösung dieses Problems zeigt die US 4,105,260 eine Lösung, bei der Paßfedern oder dergleichen in entsprechenden Nuten oder Bohrungen zwischen dem einen Teil des Endgliedes und der Bodenplatte angeordnet sind, so daß hierdurch die.Befestigungsbolzen der Bodenplatte weitgehend von Scherkräften und von Biegebelastungen freigehalten werden sollen.

Diese Ausbildung ist insofern aufwendig als zusätzliche Teile eingebracht werden müssen und entsprechende Nuten oder Bohrungen vorgesehen werden müssen. Zudem besteht die Gefahr, daß beim Wechsel der Bodenplatten die entsprechenden Elemente verlorengehen können.

Ausgehend von dem gattungsgemäßen Stand der Technik liegt der Erfindung die Aufgabe zugrunde, eine Kette angegebener Art zu schaffen, die einfach zu fertigen ist, bei der die Montage einfach und sicher durchzuführen ist, und bei der eine Selbsthaltung des in Eingriffslage befindlichen Endgliedes der Kette gewährleistet ist.

Insbesondere ist ein Ziel der Erfindung, eine Kettenausbildung zu schaffen, bei der die Befestigungsbolzen von Bodenplatten im Bereich des geteilten Endgliedes von Scherkräften oder Biegekräften weitgehend freigehalten sind, ohne dass es dazu der Anordnung zusätzlicher Teile bedarf.

Zur Lösung der Aufgabe schlägt die Erfindung vor, dass die Brust der Zähne, mit der die Zähne des ersten und zweiten Teilgliedes in Eingriffslage aneinander anliegen, mit Hinterschnitt versehen sind, so dass diese durch die Kettenzugkraft reibschlüssig und/oder formschlüssig in Eingriff gehalten sind, und dass der Hinterschnitt der Zahnbrust in einem einem Winkel von 90 ° zuzüglich Scharnierwinkel abzüglich dem der Selbsthemmung entsprechenden Reibungswinkel zur Kettenzugrichtung gerichtet ist.

Gemäß der Erfindung sind die Kettenendglieder beziehungsweise deren Teilglieder einfach zu fertigen.

Durch die entsprechende Winkelstellung der Brust der Zähne wird eine Selbsthaltung erreicht. Die Ausrichtung der Zahnbrust relativ zur Kettenzugrichtung ist mit Hinterschnitt ausgebildet, so dass eine Selbsthemmung mindestens aufgrund der sich zwischen den Elementen in Eingriffslage einstellenden Reibkräfte gewährleistet ist.

Da bei den üblichen Ketten für Kettenfahrzeuge oder Fördereinrichtungen jeweils eine Umlenkung der Kette im Bereich des Antriebsrades und des Umlenkrades erfolgt, ist ein entsprechender Scharnierwinkel der Kettenglieder zueinander erforderlich.

Um trotz dieses Scharnierwinkels eine sichere Selbsthaltung des Kettenendgliedes zu gewährleisten, ist bevorzugt vorgesehen, dass der Hinterschnitt der Zahnbrust in einem Winkel von 90 ° zuzüglich Scharnierwinkel abzüglich dem der Selbsthemmung entsprechenden Reibungswinkel zur Kettenzugrichtung gerichtet ist.

Durch diese Ausbildung ist sichergestellt, dass auch beim Umlauf um das Umlenkrad oder das Antriebsrad der Eingriff der Zahnung der Teilglieder des Kettenendgliedes erhalten bleibt.

Eine bevorzugte Weiterbildung wird darin gesehen, dass der Rücken der Zähne sowie die zu diesem Rücken parallele Flanke der Zahnlücke derart geneigt ist, dass die über den Zahn in Richtung zum jeweils anderen Teilglied gerichtete gedachte Verlängerung der Brust und des Rückens zueinander konvergierend verlaufen, so dass die Teilglieder aus der Nichteingriffslage in die Eingriffslage und analog in die Nichteingriffslage der Zähne und Zahnlücken parallel zur von der Brust aufgespannten Ebene verschieblich und in der verschobenen Lage, in der die Zahnbrüste einander nicht oder nur noch gering überdecken, um eine Schwenkachse der Teilglieder oder weiterer Kettenglieder der Kette schwenkbar sind. Gemäß dieser Ausbildung ist das Zusammenführen und auch das Lösen der Teilglieder voneinander in einfacher Weise in der Form möglich, dass eine geringe Schiebebewegung parallel zur Brust der Zähne der Teilglieder erfolgt, wobei dieser Querverschiebungsbewegung folgend eine Schwenkbewegung um einen Kettenbolzen beziehungsweise eine Kettenbuchse des Teilgliedes oder eines dem Teilglied benachbarten Kettengliedes erfolgen kann, um die Zahnung außer Eingriff zu bringen oder die Eingriffsbewegung einzuleiten. Durch die angegebene Ausbildung wird der notwendige Freiraum für die Bewegung der Teilglieder zueinander beim Zusammenfügen oder beim Zerlegen der Teilglieder ermöglicht, wobei in der Eingriffslage eine Abstützung der Zahnbrust und auch der Zahnrücken an den entsprechenden Teilen des jeweils anderen Teilgliedes erfolgt.

Das Kettenendglied weist insgesamt die Normalform eines nicht geteilten Kettengliedes auf, nämlich eine etwa angenäherte Ovalform, wobei die Außenfläche zur Auflage der Bodenplatte und zu deren Fixierung dient, während die Innenfläche als Lauffläche ausgebildet ist, die an den Lenkrollen, Laufrollen, Umlenkräder und Antriebsräder angreift. Die Lageraugen der Teilglieder sind zueinander versetzt, so dass das eine Lagerauge auf das überstehende Bolzenende des Kettenbolzens aufgesteckt und mit diesem drehfest verbunden werden kann, beispielsweise durch Aufpressen oder Schrumpfung, während das Lagerauge des anderen Teilgliedes auf die Kettenbuchse des folgenden Kettengelenkes aufgesteckt und gegebenenfalls auch drehfest mit dieser verbunden werden kann. Bevorzugt ist zudem vorgesehen, dass in den Teilgliedern zueinander parallele Bohrungen zur Aufnahme von Befestigungsbolzen für Bodenplatten ausgebildet sind, die aus der äußeren Fläche der Teilglieder orthogonal zur äußeren Fläche gerichtet offen ausmünden, wobei der die äußere Fläche bildende Vorsprung des Teilgliedes von den Befestigungsbolzen mit radialem Spiel durchgreifbare Bohrungen und der die innere Fläche bildende Vorsprung des Teilgliedes dazu im wesentlichen koaxiale Gewindebohrungen aufweist, in die die Befestigungsbolzen für die Bodenplatte mit ihrem Gewindeschaft einschraubbar sind.

Auf diese Weise können wie üblich Bodenplatten an den Teilgliedern befestigt werden, wobei die Befestigungsbolzen bei der bestimmungsgemäßen Benutzung nicht oder nur unwesentlich durch Querkräfte (Scherkräfte oder Biegekräfte) belastet werden, da sie nur in dem einen Teilglied schraubbefestigt sind, und das andere Teilglied an entsprechenden Bohrungen mit radialem Spiel durchgreifen. Bei trotz der erfindungsgemäßen Zahnung eventuell auftretenden geringen Bewegungen zwischen den Teilgliedern des jeweiligen Endgliedes führt dies nicht oder nur unwesentlich zu einer Querkraftbelastung der Befestigungsbolzen.

Zwei Ausführungsbeispiele der Erfindung sind in der Zeichnung schematisch gezeigt und im folgenden näher beschrieben. Es zeigt:
- Figur 1: eine erste Ausführungsform eines geteilten Endgliedes einer Raupenkette für Kettenfahrzeuge;
- Figur 2: eine Variante in analoger Darstellung.

In der Zeichnung ist jeweils ein geteiltes Kettenendglied 1 einer Kette eines Kettenfahrzeuges oder einer Fördereinrichtung gezeigt. Es besteht aus einem Kettengliedpaar mit jeweils einem ein Kettenbolzen-/Lagerauge 2 aufweisenden ersten Teilglied 3 und einem ein Kettenbuchse/Lagerauge 4 aufweisenden Teilglied 5. Die von den Lageraugen 2 beziehungsweise 4 in Längsverlaufrichtung der Kette zueinander abragenden Vorsprünge der Teilglieder 3 beziehungsweise 5 überdecken einander in der Montagesollage. Dabei sind sie in der etwa diagonal verlaufenden Teilungsebene durch eine ineinander greifende Verzahnung miteinander verbunden. Die Zähne 6,7 und Zahnlücken 8,9 der Verzahnung sind so ausgebildet, daß die Teilglieder 3,5 durch Verschwenkung um eine Gelenkachse der Kette und nachfolgende Verschiebung parallel zur Brust der Zähne 6,7 miteinander in Eingriff gebracht werden können, wie dies in den Zeichnungsfiguren dargestellt ist. Zum Lösen der Verbindung kann zunächst eine geringfügige Verschiebung parallel zur Brust der Zähne 6,7 und anschließend eine Verschwenkung der Teilglieder 3,5 erfolgen, so daß diese außer Eingriff gebracht werden können.

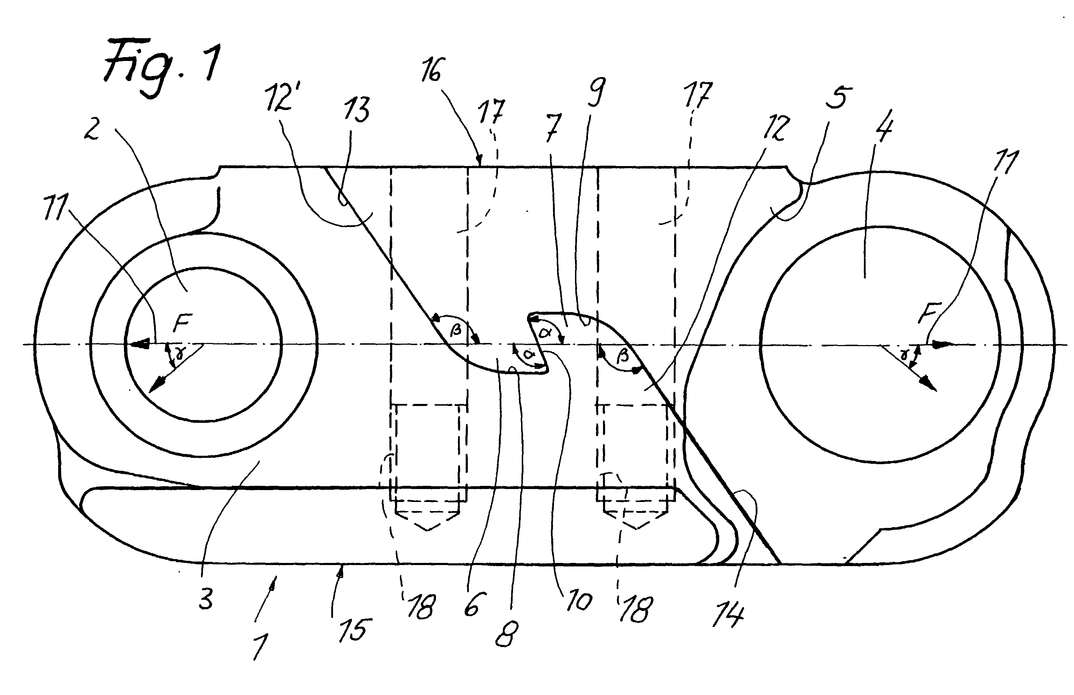

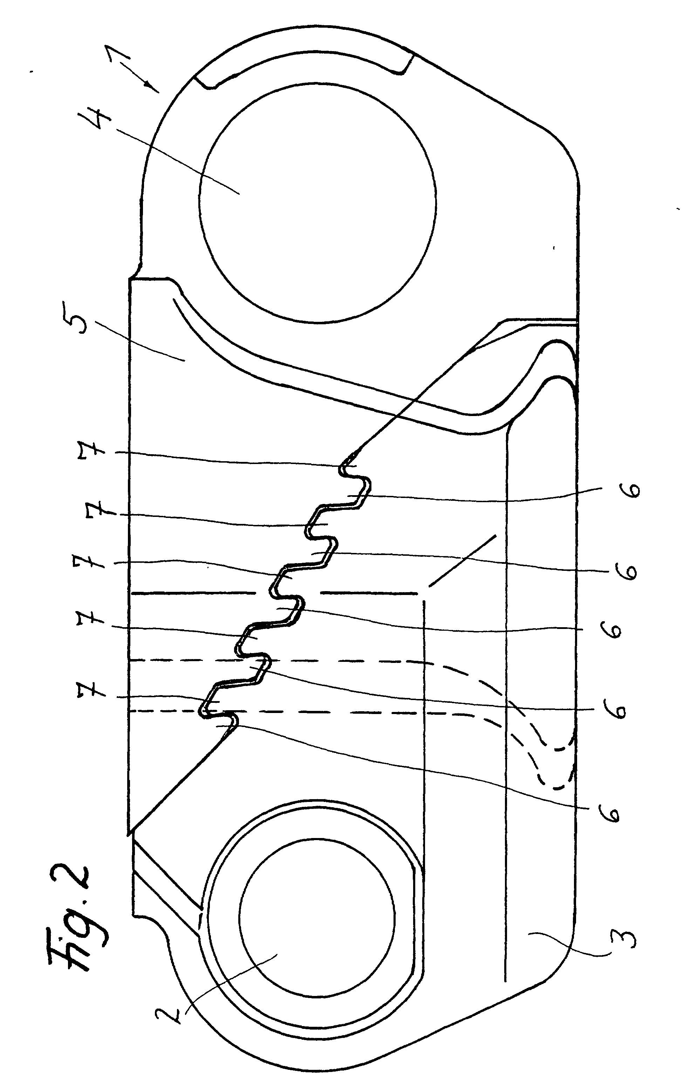

Die Trennebene zwischen dem ersten und zweiten Teilglied 3,5 läuft etwa diagonal zur Kettenlängserstreckung beziehungsweise zur Kettengliedlängserstreckung. Gemäß Figur 1 und 2 verläuft die Trennebene nicht parallel zur Zeichnungsebene, sondern quer und diagonal dazu.

Beim Ausführungsbeispiel nach Figur 1 ist jeweils nur ein Zahn 6,7 und eine Zahnlücke 8,9 ausgebildet, wohingegen bei der Ausführungsform nach Figur 2 mehrere Zähne 6,7 und Zahnlücken 8,9 vorgesehen sind. Die Brust 10 der Zähne 6,7, mit der die Zähne 6,7 des ersten und zweiten Teilgliedes 3,5 in Eingriffslage aneinander liegen, ist mit Hinterschnitt versehen, wie aus den Zeichnungsfiguren ersichtlich. In Abhängigkeit von den Reibwerten und der daraus resultierenden Selbsthemmung kann die Winkelstellung entsprechend ausgerichtet werden. Bevorzugt ist die Ausbildung eines Hinterschnitts. Durch die entsprechende Ausbildung wird erreicht, dass die Zähne 6, 7 und damit auch die Teilglieder 3,5 durch die Kettenzugkraft reibschlüssig und auch formschlüssig in Eingriff gehalten sind.

Der Rücken 12,12' der Zähne 6,7 sowie die dazu parallele Flanke 13,14 der Zahnlücken 8,9 sind etwas stärker geneigt als die Zahnbrust 10, so daß die über den Zahn in Richtung zum jeweils anderen Teilglied (in der Zeichnung nach unten oder oben) gedachce Verlängerung der Brust 10 und des Rückens 12/12' zueinander konvergierend verlaufen, so daß die Teilglieder 3,5 erleichtert um ihre Schwenkachse aus der Nichteingriffslage in die Eingriffslage der Zähne 6,7 und Zahnlücken 8,8 schwenkbar und parallel zur Zahnbrust verschiebbar sind. Der entsprechende Neigungswinkel α ist in jedem Falle kleiner als der Winkel β, um einen Freiweg für das Einschwenken der Zähne und das Verschieben der Zähne auch dann zu ermöglichen, wenn diese mit Hinterschnitt versehen sind.

Der Hinterschnitt der Zahnbrust 10 ist besonders bevorzugt in einem Winkel von α von 90 ° zuzüglich Scharnierwinkel γ zuzüglich dem der Selbsthemmung entsprechenden Reibungswinkel zur Kettenzugrichtung 11 gerichtet. Beispielsweise ist bei einem Scharnierwinkel von γ = 40 ° und einem Reibungsbeiwert von 0,15 (entspricht einem Winkel von 8,5 °). Der Winkel α vorzugsweise 90 ° + 40 ° - 8,5 ° also 121,5°. In jedem Falle ist der Winkel α so groß zu wählen, daß eine Selbsthemmung erreicht wird, wobei der zudem der Winkel α so klein wie möglich sein sollte, um die Keilwirkung auf den entsprechenden Zahn beziehungsweise die Zähne zu minimieren.

Der Winkel β des Zahnrückens ist in jedem Falle größer als der Winkel α. Bei einer Mehrfachanordnung von Zähnen und Zahnlücken, wie aus der Figur 2 ersichtlich, nimmt der Winkel α in Blickrichtung der Figur 2 von rechts nach links bezogen auf die Zähne 7 des Teilgliedes 5 zu, ebenso der Winkel β, der jeweils größer als der Winkel α an der zugehörigen Zahnbrust ist.

Jedes Teilglied 3,5 weist einen von dem Lagerauge 2 beziehungsweise 4 zum jeweils anderen Teilglied gerichtet einen Vorsprung auf, wobei die Randkante 15 beziehungsweise 16 des jeweiligen Vorsprungs etwa parallel zur Kettenzugrichtung 11 verläuft und die zweite, in der Trennebene entlang der Linie 13, 8, 14 schräg (diagonal) zu der ersten Randkante 15 und 16 gerichtet verläuft, so daß der jeweilige Vorsprung sich zum dem Lagerauge des Teilgliedes abgewandten Ende hin verjüngt. Die Zähne und Zahnlücken sind aus der zweiten Randkante ausgeformt.

Zudem sind die in den Teilgliedern 3,5 zueinander parallele und quer zur Kettenzugrichtung gerichtete Bohrungen zur Aufnahme von Befestigungsbolzen für die Bodenplatten vorgesehen. Diese Bohrungen münden orthogonal aus der äußeren Fläche der Randkante 16 der Teilglieder offen aus. Der Vorsprung des Teilgliedes, an dem die Bodenplatte anliegt, weist eine von dem Befestigungsbolzen mit radialem Spiel durchgreifbare Bohrung 17 und der Vorsprung des in der Bodenplatte entfernt liegenden Teilgliedes dazu im wesentlichen koaxiale Gewindebohrungen 18 auf. In diese sind die Befestigungsbolzen mit ihrem Gewindeschaft einschraubbar. Auf diese Weise ist erreicht, dass sich ein zwischen den Teilgliedern 3,5 entstehendes Spiel bei auftretenden Kettenzugkräften nicht in Form von Querkräften auf die Befestigungsbolzen auswirkt.

## Patentansprüche

1. Kette für Kettenfahrzeuge oder Fördereinrichtungen mit Kettenbolzen und Kettenbuchsen, die auf die Kettenbolzen konzentrisch zu diesen aufgesteckt sind und aus denen die Enden der Kettenbolzen vorragen, mit paarweise parallel angeordneten Kettengliedern mit Lageraugen an beiden Enden, deren eines mit einem ersten Kettenbolzen und deren anderes mit einer auf einen dem ersten Kettenbolzen benachbarten zweiten Kettenbolzen aufgesteckten Kettenbuchse drehfest verbunden ist, sowie mit geteilten Kettenendgliedern (1), bestehend aus einem Kettengliedpaar mit jeweils einem ein Kettenbolzen-Lagerauge (2) aufweisenden und einem ein Kettenbuchsen-Lagerauge (4) aufweisenden ersten und zweiten Teilglied (3,5), deren von den Lageraugen (3,4) abragende in Längslaufrichtung der Kette zueinander gerichtete hakenartige Vorsprünge einander überdeckend angeordnet und lösbar durch eine ineinander greifende Verzahnung miteinander verbunden sind, wobei die Zähne (6,7) und Zahnlücken (8,9) der Verzahnung der Teilglieder (3,5) miteinander in Eingriff oder voneinander außer Eingriff bringbar sind, wobei jedes Kettenglied eine äußere Fläche zur Aufnahme einer Bodenplatte und eine dazu parallele innere Fläche als Lauffläche für Stützrollen, Tragrollen, Umlenkräder und/oder Antriebsräder aufweist, die Trennebene zwischen dem ersten und zweiten Teilglied (3,5) des Kettenendgliedes etwa diagonal zur Kettenlängserstreckung beziehungsweise zur Kettengliedlängserstreckung verläuft, und im Bereich der Trennebene an jedem Teilglied (3,5) mindestens ein Zahn (6,7) und eine Zahnlücke (8,9) ausgebildet ist, **dadurch gekennzeichnet, dass** die Brust (10) der Zähne (6,7), mit der die Zähne des ersten und zweiten Teilgliedes (3,5) in Eingriffslage aneinander anliegen, mit Hinterschnitt versehen sind, so dass diese durch die Kettenzugkraft reibschlüssig und/oder formschlüssig in Eingriff gehalten sind, und dass der Hinterschnitt der Zahnbrust (10) in einem einem Winkel (2) von 90 ° zuzüglich Scharnierwinkel abzüglich dem der Selbsthemmung entsprechenden Reibungswinkel zur Kettenzugrichtung (11) gerichtet ist.

2. Kette nach Anspruch 1, **dadurch gekennzeichnet, dass** der Rücken (12,12') der Zähne (6,7) sowie die zu diesem Rücken parallele Flanke (13,14) der Zahnlücke derart geneigt ist, dass die über den Zahn (6,7) in Richtung zum jeweils anderen Teilglied gerichtete gedachte Verlängerung der Brust und des Rückens zueinander konvergierend verlaufen, so dass die Teilglieder (3,5) aus der Nichteingriffslage in die Eingriffslage und analog in die Nichteingriffslage der Zähne (6,7) und Zahnlücken (8,9) parallel zur von der Brust aufgespannten Ebene verschieblich und in der verschobenen Lage, in der die Zahnbrüste einander nicht oder nur noch gering überdecken, um eine Schwenkachse der Teilglieder oder weiterer Kettenglieder der Kette schwenkbar sind.

3. Kette nach einem der Ansprüche 1 oder 2, **dadurch gekennzeichnet, dass** in den Teilgliedern (3,5) zueinander parallele Bohrungen zur Aufnahme von Befestigungsbolzen für Bodenplatten ausgebildet sind, die aus der äußeren Fläche der Teilglieder (3,5) orthogonal zur äußeren Fläche gerichtet offen ausmünden, wobei der die äußere Fläche bildende Vorsprung des Teilgliedes (5) von den Befestigungsbolzen mit radialem Spiel durchgreifbare Bohrungen (17) und der die innere Fläche bildende Vorsprung des Teilgliedes (3) dazu im wesentlichen koaxiale Gewindebohrungen (18) aufweist, in die die Befestigungsbolzen für die Bodenplatte mit ihrem Gewindeschaft einschraubbar sind.

## Claims

1. Track for tracked vehicles or conveying devices comprising track pins and track bushes which are placed over the track pins concentrically with respect to the latter and from which the ends of the track pins project, comprising track elements with bearing eyes at both ends, said track elements being arranged in pairs and in parallel, one of said track elements being connected, in a manner fixed against rotation, to a first track pin and the other of said track elements being connected, in a manner fixed against rotation, to a track bush that is placed over a second track pin adjacent to the first track pin, and also comprising divided track end elements (1) consisting of a pair of track elements comprising a first and second part-element (3, 5) respectively having a track pin bearing eye (2) and a track bush bearing eye (4), the hook-like protrusions of said part-elements, which protrusions project from the bearing eyes (3, 4) and are directed towards one another in the longitudinal running direction of the track, being arranged so as to overlap one another and being releasably connected to one another by a meshing toothing, wherein the teeth (6, 7) and tooth spaces (8, 9) of the toothing of the part-elements (3, 5) can be brought into or out of engagement with one another, wherein each track element has an outer surface for receiving a baseplate and an inner surface that is parallel thereto as a running surface for supporting rollers, carrier rollers, deflection wheels and/or drive wheels, the separating plane between the first and second part-elements (3, 5) of the track end element runs approximately diagonally with respect to the longitudinal direction of the track or to the longitudinal direction of the track element, and at least one tooth (6, 7) and one tooth space (8, 9) are formed in the region of the separating plane on each part-element (3, 5), **characterized in that** the front (10) of the teeth (6, 7) by which the teeth of the first and second part-elements (3, 5) bear against one another in the engaged position are provided with an undercut so that they are held in engagement in a frictionally tight and/or form-fitting manner by the tensile force of the track, and **in that** the undercut of the tooth front (10) is directed at an angle (2) of 90° plus a hinge angle minus the angle of friction corresponding to self-locking, with respect to the track advance direction (11).

2. Track according to Claim 1, **characterized in that** the back (12, 12') of the teeth (6, 7) and the flank (13, 14) of the tooth space that is parallel to this back are inclined such that the imaginary extensions of the front and back directed over the teeth towards the respective other part-element run in a converging manner with respect to one another, so that the part-elements (3, 5) can be displaced out of the non-engaged position into the engaged position and analogously into the non-engaged position of the teeth (6, 7) and tooth spaces (8, 9) parallel to the plane across the front, and in the displaced position in which the tooth fronts do not overlap one another or overlap one another only slightly can be pivoted about a pivot axis of the part-elements or other track elements of the track.

3. Track according to either of Claims 1 and 2, **characterized in that** bores for receiving fixing bolts for baseplates are made in the part-elements (3, 5), said bores being parallel to one another and opening from the outer surface of the part-elements (3, 5) orthogonally with respect to the outer surface, wherein the protrusion of the part-element (5) that forms the outer surface has bores (17) which can be passed through by the fixing bolts with radial play, and the protrusion of the part-element (3) that forms the inner surface for this purpose has essentially coaxial threaded bores (18) into which the fixing bolts for the baseplate can be screwed by their threaded shaft.

## Revendications

1. Chenille pour véhicules à chenilles ou dispositifs de transport avec des tourillons de chenilles et des douilles de chenilles, qui sont enfilées sur les tourillons de chenilles de manière concentrique à ceux-ci et desquelles s'avancent les extrémités des tourillons de chenilles, avec des maillons de chenilles disposés parallèlement par paires et comportant aux deux extrémités des coussinets, dont l'un est relié avec un premier tourillon de chenille et l'autre en solidarité de rotation avec une douille de chenille enfilée sur un deuxième tourillon de chenille voisin du premier tourillon de chenille, ainsi qu'avec des maillons d'extrémité de chenilles divisés (1) se composant d'une paire de maillons de chenilles avec un premier et un deuxième maillon partiel (3, 5) comprenant respectivement un coussinet de tourillon de chenille (2) et un coussinet de douille de chenille (4) et dont les avancées en forme de crochets s'écartant des coussinets (3, 4) et dirigées l'une vers l'autre en direction de marche longitudinale de la chenille sont disposées en se recouvrant mutuellement et sont reliées de manière amovible entre elles par une denture qui s'interpénètre, sachant que les dents (6, 7) et les entredents (8, 9) de la denture des maillons partiels (3, 5) peuvent être mis en prise ou hors prise entre eux, sachant que chaque maillon de chenille comprend une surface extérieure pour recevoir une plaque de fond et une surface intérieure parallèle à celle-ci en tant que surface de roulement pour des rouleaux d'appui, des rouleaux porteurs, des roues de renvoi et/ou des roues d'entraînement, que la surface de séparation entre le premier et le deuxième maillon partiel (3, 5) du maillon de chenille s'étend à peu près en diagonale par rapport à l'extension longitudinale de la chenille ou à l'extension longitudinale du maillon de chenille et qu'au moins une dent (6, 7) et un entredent (8, 9) sont formés sur chaque maillon partiel (3, 5 ) dans la zone du plan de séparation, **caractérisée en ce que** le front (10) des dents (6, 7), avec lequel les dents du premier et du deuxième maillon partiel (3, 5) sont en contact entre elles en position de prise, est muni d'un dégagement, de sorte que celles-ci sont maintenues en prise par la force de traction de la chenille en étant en adhérence et/ou en complémentarité de forme et **en ce que** le dégagement du front de la dent (10) est dirigé vers le sens de la traction de la chenille (11) avec un angle (2) de 90° augmenté de l'angle de charnière et diminué de l'angle de frottement qui correspond à l'autoblocage.

2. Chenille selon la revendication 1, **caractérisée en ce que** la partie arrière (12, 12') des dents (6, 7) ainsi que le flanc (13, 14) de l'entredent parallèle à cette partie arrière sont inclinés de telle manière que les prolongements imaginaires respectifs du front et de la partie arrière dirigé au-delà de la dent (6, 7) en direction de l'autre maillon partiel respectif s'étendent en étant convergents entre eux, de sorte que les maillons partiels (3, 5) peuvent être déplacés parallèlement au plan projeté par le front depuis la position où ils ne sont pas en prise jusque dans la position où ils sont en prise et de manière analogue dans la position où les dents (6, 7) et les entredents (8, 9) ne sont pas en prise et peuvent, dans la position déplacée, dans laquelle les fronts des dents ne se recouvrent pas ou ne se recouvrent que faiblement, être pivotés autour d'un axe de pivotement des maillons partiels ou d'autres maillons de la chenille.

3. Chenille selon l'une quelconque des revendications 1 ou 2, **caractérisée en ce que** dans les maillons partiels (3, 5) sont formées des forures parallèles entre elles pour recevoir des boulons de fixation pour des plaques de fond, qui débouchent librement de la surface extérieure des maillons partiels (3, 5) en étant dirigées dans le sens orthogonal par rapport à la surface extérieure, sachant que l'avancée du maillon partiel (5) formant la surface extérieure comprend des forures (17) pouvant être traversées avec un jeu radial par les boulons de fixation et que l'avancée du maillon partiel (3) formant la surface intérieure comprend des trous filetés (18) sensiblement coaxiaux à celles-ci, dans lesquels peuvent être vissées les tiges filetées des boulons de fixation pour la plaque de fond.
